Europäisches Patentamt

(19) European Patent Office

Office européen des brevets

(11) Publication number: **0 093 449**
A1

# (12) EUROPEAN PATENT APPLICATION

(21) Application number: 83104326.0

(22) Date of filing: 02.05.83

(51) Int. Cl.³: **B 29 F 3/00**

(30) Priority: 03.05.82 US 374078

(43) Date of publication of application:
09.11.83 Bulletin 83/45

(84) Designated Contracting States:
BE DE FR GB IT SE

(71) Applicant: UNION CARBIDE CORPORATION
Old Ridgebury Road
Danbury Connecticut 06817(US)

(72) Inventor: Dearborn, John Richard, Jr.
85 North Passaic Avenue
Chatham New Jersey 07928(US)

(72) Inventor: Schursky, Kenneth George
707 Meadow Road
Bridgewater New Jersey 08807(US)

(74) Representative: Weinhold, Peter, Dr. et al,
Patentanwälte Dr. V. Schmied-Kowarzik Dipl.-Ing. G.
Dannenberg Dr. P. Weinhold Dr. D. Gudel Dipl.-Ing. S.
Schubert Dr. P. Barz Siegfriedstrasse 8
D-8000 München 40(DE)

(54) Polyolefin extrusion process and apparatus.

(57) A process and apparatus are disclosed for the melting
and mixing of polyolefin materials in an extruder (10) having
a conventional helical mixing screw section (20), a fluted
mixer head section (22) and an unflighted screw section (24)
positioned thereon, wherein said fluted mixer head section
(22) is employed as the final downstream screw section of
said extruder screw and said unflighted screw section (24)
upstream of said fluted mixer head section (22).

FIG. 1

- 1 -

POLYOLEFIN EXTRUSION PROCESS AND APPARATUS

SPECIFICATION

The present invention relates to process and apparatus for the melting and mixing of polyolefin materials, preferably polyethylene, in an extruder. More particularly, the process and apparatus relates to such melting and mixing in an extruder employing a screw having a selected arrangement of extruder screw processing sections positioned thereon.

Prior extruders for the melting and mixing of low-density linear polyolefins have often employed helical melting and mixing sections in combination with fluted mixer head sections. One of the first of such extruders is discussed in U.S. Patent No. 3,486,192 to G. LeRoy (1969) which teaches the employment of such a mixer head section positioned between conventional helically-flighted melting and mixing sections positioned on the extruder screw. Another such extruder is taught in U.S. Patent No. 3,730,492 to B.H. Maddock (1973). That extruder employs a fluted mixer head section which is positioned immediately upstream of the extruder exit die.

It has long been desired to reduce the processing and exit temperatures of the polyolefin materials being passed from an extruder employing screws of the type employed in the Maddock arrangement of mixing sections. It has also been desired to provide a polyolefin extruder mixing screw which permits operation at torques capable of being delivered to such an extruder for the same resins as in the prior art.

Accordingly, the aims and objectives of the present invention are to provide extruder process and apparatus enabling the attainment of lower processing temperatures and operation at available delivered torque values. Other aims and objectives will be apparent from the following claims and appended drawings.

In the appended drawings:

FIG. 1 is a schematic cross-sectional view of a portion of the extruder housing showing in position, in broken side view, an extruder screw embodying the apparatus aspect of the present invention;

FIG. 2 is an enlarged partial side elevation view of the unflighted screw section of the screw of FIG. 1 of the drawing; and

FIG. 3 is a graphical representation of the temperature vs. time relationship, at various points in the space, between the unflighted section wall of a screw embodying the invention and the barrel wall of the extruder.

In accordance with the present invention, a melting and mixing process for low density polyolefins is provided in an extruder, employing a screw having a conventional helical mixing zone, fluted mixer head zone and unflighted screw zone, comprising passing said polyolefin successively through said conventional helical mixing zone, said unflighted screw zone and then through said fluted mixing zone, which comprises the final mixing zone.

As employed herein, the term "unflighted" screw section means the screw section presents a relatively smooth surface, preferably of constant diameter, without any flighted elements such as helical screw threads, mixing flutes or troughs, or the like, which are provided on the conventional mixing screw section and fluted mixing section which bound the unflighted screw on the upstream and downstream ends, respectively.

In accordance with the apparatus aspect of the invention, an extruder screw is provided for the melting and mixing of polyolefin materials, having a conventional helical mixing screw section, a fluted mixer head section and an unflighted screw section positioned thereon, comprising said fluted mixer head section positioned as the final downstream screw section of said extruder screw and said unflighted screw section positioned upstream of said fluted mixer head section.

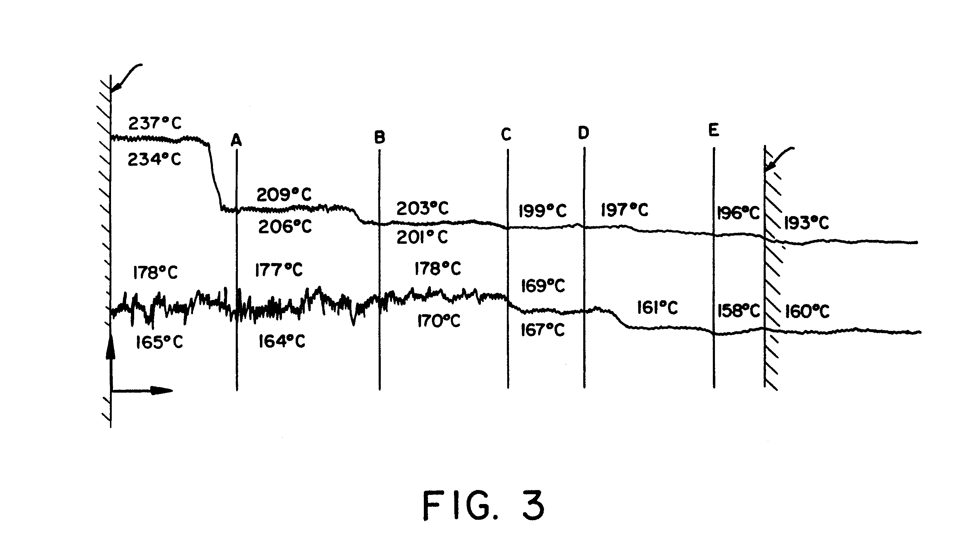

It has been found that the diameter of the extruder screw at the unflighted section need not be of any critical diameter or dimension relative to the internal diameter of the inner barrel of the extruder. It is desired that the diameter of the unflighted screw section be specified such that the torque required by the arrangement of extruder screw processing sections be less than that available delivered torque values and also sufficiently small to provide a substantially cylindrical toroidally-shaped passageway between the unflighted screw section and the internal walls of the extruder barrel. The thickness of this cylindrical toroidally-shaped section should be sufficient to provide the high shear mixing action in the unflighted screw section which will impart to the material being melted and mixed in the extruder a primarily longitudinal flow path, coupled with a circumferential flow path due to the rotation of the unflighted section which produces a two dimensional shearing action, thereby mixing the thermally non-homogeneous fluid as indicated in FIG. 3 by the temperature vs. time traces at the upstream and downstream thermocouple locations there indicated.

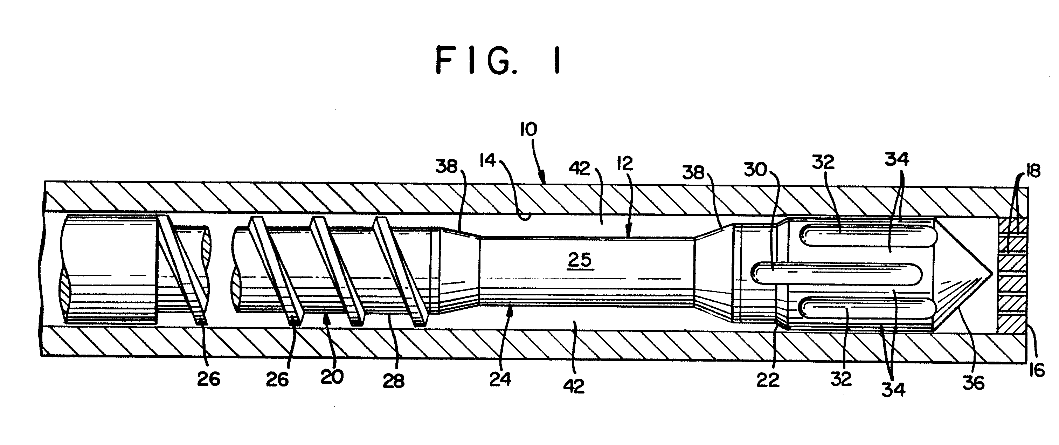

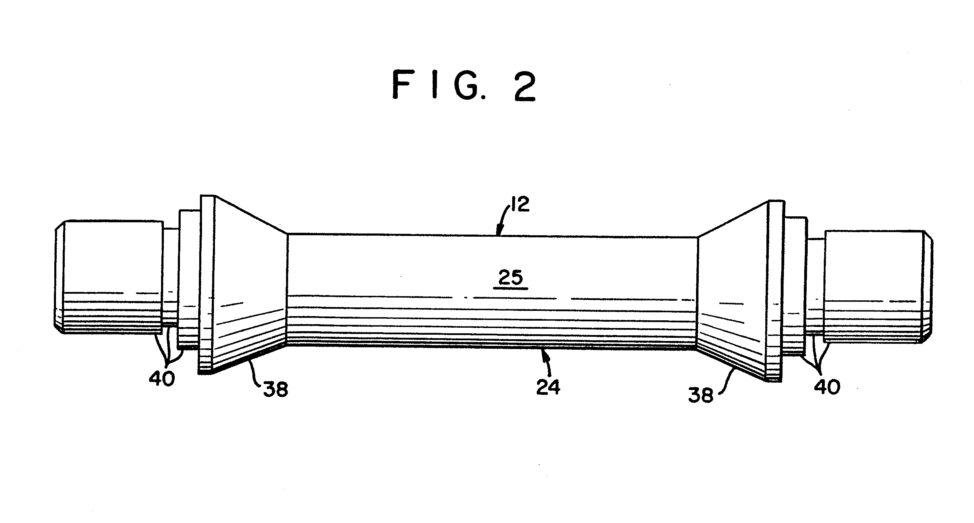

Referring specifically to the embodiment of apparatus of the invention shown in FIGS 1 and 2 of the drawings, an extruder 10 is provided having a screw 12 positioned in the barrel thereof defined by walls 14. An extruder die 16 with exit ports 18 is provided at the downstream end of extruder 10. Extuder screw 12 had three screw sections: conventional helical melting and mixing section 20 at the upstream end thereof, fluted mixing head section 22 at the downstream end thereof and an intermediate unflighted screw section 24 therebetween. Helical mixing section 20 has a helical mixing screw thread 26 supported to its downstream end, by the extruder base or root surface 28 thereof. Flighted mixer head section 22 has a plurality of longitudinal inlet troughs 30 and outlet troughs 32 separated by intervening flutes 34. The downstream end of flighted mixing section 22 has a conical shape 36.

The intermediate unflighted screw section 24 (shown more specifically in FIG. 2) has a central substantially constant diameter surface portion 25 bounded on opposite ends by tapered frusto-conical elements 38 which are, in turn, bounded by locking elements 40 which secure the unflighted screw section to the upstream conventional helical mixing section 20 and the downstream flighted mixing head section 22. The frusto-conical elements are employed for streamlining purposes only so as to prevent the formation of any stagnant regions in which polymer may degrade. The annualar or cylindrically-toroidal shaped space 42 discussed hereinabove is the space formed between the outer walls 24 of the unflighted screw section 24 and the inner walls 14 of the extruder barrel.

A series of comparative experiments were carried out to determine the amount of melting and mixing occurring in the annular space between the unflighted mixing section and extruder barrel walls. The degree of such melting and mixing is attained from the temperature vs. time delivery taken from the position on the unflighted screw section, as represented in FIG. 3 of the drawings. Such experiments were carried out while employing an unflighted screw section which provided a 0.2 inch thick annular spacing between the unflighted screw section and the internal barrel walls of a 2-1/2 inch extruder. The positions A, B, C, D and E represent, respectively, 1/2, 1-1/2, 2-1/2, 3-1/2, 4-1/2 turns (one turn = 0.036") from the wall of the unflighted screw section. As is noted, the rotation speed was 80 RPM and the head pressure was 4000 psi, with a broad operability range between about 25-200 RPM and a 1,500-10,000 psi head pressure range. The temperature profile exhibited in the upper curve shows that recorded on a thermocouple position near the mixing head; the profile of the lower curve shows that recorded on a thermocouple position near the conventional helical flighted section.

It is obvious for an expert that all typical ranges of parameters depend on the specific resin being process, the diameter of the screw, the total barrel length and speed of rotation. Thus, typically a screw having a mixing section 20 and a design of selected pitch and root depth to match the resin being processed would be employed. According to special embodiments of this invention the length-to-diameter ratio would be between 14 and 24 and preferably 18 for LLDPE. The tapered sections 38 are also not critical and are merely for convenience usually designated in one-half length-to-diameter ratio, d being of course the outer diameter of the screw. It is to be noted that the preferred depth-to-barrel diameter ratio of the unflighted screw section is about 0.08 to 0.24. This would vary depending upon the composition and properties of the resin being processed. The l-to-d ratio of this unflighted section 24 is preferably between about 1 and 8, with 6 being most preferred for LLDPE.

According special embodiments the l-to-d ratio for the mixer head is between about 1 and 4, with 2 being the most preferred ration for LLDPE. The number of pairs of flutes 30 and 32 of the mixer head depend basically upon the diameter of the crew, e.g. a 6-inch screw diameter would have between about 2 - 6 pairs of flutes, depending upon the resin being processed, the diameter of the screw, the total barrel length and the speed of ratation of the screw.

Examples of data, as to extruder exit temperatures and extruder torque at various screw feeds and pressures, are set forth in the following Table for two different annular thicknesses in the unflighted screw section with extruder screw arrangements of both prior art arrangement ("after") of sections as against the data obtained using the arrangement of sections in accordance with the present invention ("before").

## TABLE

EXIT TEMPERATURES - °C (°F) Comparison of unflighted section placed before and after the mixing head.

| Speed (RPM) | Pressure (Psi) | 0.6" Annular Thickness Before | After | 0.2" Annular Thickness Before | After |
|---|---|---|---|---|---|
| 40 | 2000 | 179(354.2) | 186(366.8) | 196(384.8) | 210(410.0) |
| 40 | 4000 | 193(379.4) | 196(384.8) | 204(399.2) | 223(433.4) |
| 80 | 2000 | 193(379.4) | 195(383.0) | 199(390.2) | 228(442.4) |
| 80 | 4000 | 208(406.4) | 213(415.4) | 232(449.6) | 238(449.6) |
| 120 | 2000 | 199(390.2) | 201(393.8) | 221(429.9) | 247(476.6) |
| 120 | 4000 | 215(419.0) | 215(419.0) | 242(467.6) | 260(500.0) |

TORQUE Kw/RPM (HP/RPM) - Comparison of unflighted section placed before and after the mixing head.

| 40 | 2000 | .149(.200) | .139(.186) | .161(.216) | .151(.202) |
|---|---|---|---|---|---|
| 40 | 4000 | .153(.205) | .142(.190) | .167(.224) | .154(.207) |
| 80 | 2000 | .180(.242) | .166(.223) | .195(.262) | .183(.245) |
| 80 | 4000 | .184(.247) | .170(.228) | .198(.265) | .187(.251) |
| 120 | 2000 | .198(.265) | .183(.245) | .212(.284) | .204(.274) |
| 120 | 4000 | .202(.271) | .186(.250) | .216(.290) | .206(.276) |

0093449

It is to be noted that, in the above experiments, the (LLDPE) polyethylene resin employed was a linear, low density, low pressure resin having a density of 0.918 gm/cc, a 1.0 melt index and sold commercially by Union Carbide Corporation under the designation GRSN-7047.

Accordingly, it is to be noted, from a study of the data set forth in the Table, that the invention, employing an unflighted section between the upstream conventional helical screw section of the downstream fluted mixer head section, permits operation at lower processing exit temperatures. Inspection of the resultant product indicates a better mixing than attained by the mixing screws of the prior art.

It has also been found that radial temperature gradients obtained in mixing with the conventional or prior art arrangements of extruder screw section will be virtually eliminated by the employement of the extruder screw section of the present invention.

What is claimed is:

1.    A process for the melting and mixing of polyolefins in an extruder employing a screw having a conventional helical melting and mixing zone, a fluted mixer head zone and an unflighted screw zone, comprising passing said polyolefin successively through said conventional helical mixing zone, through said unflighted screw zone, and then through said fluted mixing zone which comprises the final mixing zone.

2.    The process in accordance with claim 1, wherein said polyolefin is linear polyethylene.

3.    The process in accordance with one or more of the claims 1-2, wherein said unflighted screw zone is of substantially constant diameter.

4.    The process for the melting and mixing in accordance with one or more of the claims 1-3, wherein polyethylene has low density and a melt index of approximately 1.0 and said unflighted screw zone has a depth-to-diameter ratio of between about 0.08 and 0.24.

5.    The process in accordance with one or more of the claims 1-4, wherein said extruder is rotated at from 25 to 200 RPM and is maintained at an internal head pressure between about 1,500 and 10,000 psi.

6.    In extruder screws for the melting and mixing of polyolefins materials having a conventional helical mixing screw section, a fluted mixer head section and an unflighted screw section positioned thereon, the improvement which comprises employing said fluted mixer head section as the

- 10 -

final downstream screw section of said extruder screw and said unflighted screw section upstream of said flulted mixer head section.

7. The extruder screw in accordance with claim 6, wherein said unflighted screw section is positioned immediately upstream of said fluted mixer head section.

# FIG. 1

009 3449

FIG. 2

FIG. 3

0093449

0093449

European Patent
Office

EUROPEAN SEARCH REPORT

Application number

EP 83104326.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | EP - A1 - 0 010 592 (UNION CARBIDE CORP.)<br><br>* Totality *<br><br>-- | | B 29 F 3/00 |
| D,A | US - A - 3 486 192 (G. LE ROY)<br><br>* Totality *<br><br>---- | | |

TECHNICAL FIELDS
SEARCHED (Int. Cl. ³)

B 29 F

B 29 D

The present search report has been drawn up for all claims

| Place of search | Date of completion of the search | Examiner |
|---|---|---|
| VIENNA | 04-08-1983 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  member of the same patent family, corresponding document

EPO Form 1503 03.82